# EUROPEAN PATENT SPECIFICATION

(11) **EP 3 902 228 B1**
(45) Date of publication and mention of the grant of the patent: **04.10.2023**
(21) Application number: 19911755.7
(22) Date of filing: 22.01.2019
(51) Int. Cl.: H04L 69/22, H04L 45/00

(54) **DATA MESSAGE TRANSMISSION METHODS**
VERFAHREN ZUR DATENNACHRICHTENÜBERTRAGUNG
PROCÉDÉS DE TRANSMISSION DE MESSAGE DE DONNÉES

(43) Date of publication of application: 27.10.2021
(73) Proprietor: Huawei Technologies Co., Ltd., Longgang District, Shenzhen, Guangdong 518129 (CN)
(72) Inventor: TAL, Alex, 3824942 Hadera (IL); LAM, Wan, Shenzhen, Guangdong 518129 (CN); WANG, Zhengbo, Shenzhen, Guangdong 518129 (CN)
(74) Representative: Epping - Hermann - Fischer
(86) International application number: PCT/CN2019/072589
(87) International publication number: WO 2020/150878

(56) References cited:
- EP-A1- 3 223 481
- EP-A1- 3 249 863
- WO-A1-2016/127398
- CN-A- 104 115 463
- CN-A- 105 471 817
- CN-A- 105 681 196
- US-A1- 2014 362 857
- US-A1- 2017 353 387

## Description

### TECHNICAL FIELD

Embodiments of this disclosure relate to the field of communications technologies, and in particular, to a data packet transmission methods.

### BACKGROUND

As a data transmission network, a data center network (DCN) includes a plurality of nodes, and each edge node of the plurality of nodes is connected to one or more servers. Each of the plurality of nodes is used to forward a data packet that is sent to a target server by a source server. In a transmission process of the data packet, each node may execute services corresponding to the data packet.

Specifically, after receiving the data packet, a first node processes a series of services corresponding to the data packet. After completing service processing that matches a service processing capability of the first node, the first node sends the data packet to a second node. Similarly, after receiving the data packet, the second node processes a series of services corresponding to the data packet. After completing service processing that matches a service processing capability of the second node, the second node sends the data packet to a subsequent device.

A pipeline from the source server to the target server includes a plurality of nodes independent of each other. However, by using the foregoing data packet transmission method, each node starts to process services corresponding to the data packet from a same processing stage, so that the services processed by the nodes include a large quantity of same services. Therefore, not only efficiency of processing the services corresponding to the data packet is relatively low, but also a large quantity of resources are wasted.

Document EP 3 223 481 A1 relates to a packet processing method and an apparatus. According to this document, a first SFC proxy of a first SF entity splits a first packet to obtain a first original packet and a first service function chain header, and the first SFC proxy sends the first service function chain header to a second SFF by using a first SFF. The first SF entity processes the first original packet to obtain a second original packet, and sends the second original packet to a service classifier. The service classifier sends, to the second SFF, a second packet that is obtained after the service classifier adds a second service function chain header to the second original packet. The second SFF changes the second service function chain header in the second packet into the first service function chain header. In this way, a first packet carrying a first service function chain header can be transmitted in a network architecture in which a legacy SF exists, so that the legacy SF becomes compatible.

Document EP 3 249 863 A1 relates to an access control apparatus, system and method. The apparatus includes a receiver, a processor, and a transmitter. The method includes: receiving a first service chain forwarding rule sent by a controller; receiving a first packet sent by a classifier; and when a service chain identifier carried in the first packet matches a first service chain identifier in the first service chain forwarding rule, forwarding the first packet to a first access network element according to a first identifier. In the present invention, SDN-mechanism-based control is implemented on an access network element. In addition, based on a unified forwarding control mode on a control plane, forwarding control can be implemented on an access network and a service processing network, and therefore, service-chaining-based SDN access management and mobility management are implemented in a mobile network.

Document US 2014 / 0 362 857 A1 describes techniques useful in a network comprising a plurality of network nodes each configured to apply one or more service functions to traffic that passes through the respective network nodes. A network node receives packets encapsulated in a service header that includes information defining a variable set of context headers stacked into an association of metadata that is relevant to one or more service functions within a service path comprised of one or more network nodes. The network node interprets a forwarding state and a next-hop network node for the service path from the service header, and determines a service action or associated metadata from the set of context headers.

### SUMMARY

The present invention is set out by the set of appended claims. In the following, parts of the description and drawing referring to embodiments, examples or implementations, which are not covered by the claims are not presented as embodiments of the invention, but as illustrative examples useful for understanding the invention.

Embodiments of this disclosure provide a data packet transmission methods to resolve a problem that efficiency of processing services corresponding to a data packet is low and resources are wasted.

According to a first aspect, an embodiment of this disclosure provides a data packet transmission method, including: A first node receives a data packet and first metadata, where the first metadata is used to indicate a service processing result of the data packet by an upstream node of the first node; the first node determines a first service based on the first metadata, and processes the first service based on the data packet, where the first service belongs to one or more unprocessed services of the data packet; and the first node uses the first metadata and a processing result of the first service as second metadata, and sends the data packet and the second metadata to a second node, where the second metadata includes a service processing result of the data packet by the first node and the service processing result of the data packet by the upstream node of the first node.

The first node is any node except a last-hop node in a pipeline of the data packet, and the second node is a next-hop node of the first node. After receiving the data packet, the first node may process one or more unprocessed services currently corresponding to the data packet, and then send all processing results of a currently processed service and the data packet together to the second node. It can be learned that, by using this implementation, any-hop node in the pipeline can notify nodes behind the node in the pipeline of the processed services, so that the nodes behind the node do not repeatedly process the processed services. Therefore, not only service processing efficiency can be improved, but also packet processing (PP) resources of the node can be saved.

In a possible implementation, that the first node determines a first service based on the first metadata includes: in response to the received first metadata, the first node identifies the first service indicated by preset configuration information, where the preset configuration information indicates a service that is of a data packet and that needs to be processed by the first node. In some implementations of this disclosure, a technician may preconfigure, based on PP functions of nodes in the pipeline, services that need to be executed by the nodes, to preconfigure services corresponding to a data packet for the nodes. In this way, after receiving the first metadata, the first node in this embodiment may identify a first service indicated by configuration information preset by a technician, and the first node further processes the first service. By using this implementation, the nodes in the pipeline process some services, and each node does not need to detect services that can be processed by the node, thereby simplifying an operation procedure.

In a possible implementation, that the first node determines a first service based on the first metadata includes: The first node parses the first metadata to obtain configuration information, where the configuration information indicates the first service; and the first node determines the first service based on the configuration information. In some other implementations of this disclosure, if each node in the pipeline has processed some services, the node may generate configuration information or an instruction, to indicate services that need to be executed by a next-hop node of the node. Based on this, for example, the first metadata includes the configuration information, and the first node may parse the first metadata to obtain the configuration information, and further determine and process the first service indicated by the configuration information. By using this implementation, the nodes in the pipeline process some services, and each node does not need to detect services that can be processed by the node, thereby simplifying an operation procedure.

The first metadata further includes information about the one or more unprocessed services of the data packet. It is possible that the first metadata further includes start information of the first service, where the start information indicates a start process for processing the first service. If the first node is not a first-hop node in the pipeline, the first metadata may indicate the service processing result of the data packet by the upstream node of the first node. In addition, the first metadata may further include information about a currently unprocessed service and/or start information of the one or more unprocessed services. By using this implementation solution, the first node can learn as much service information as possible from the first metadata, thereby improving service processing efficiency of the first node.

In a possible implementation, that the first node processes a first service based on the data packet includes: The first node invokes a target resource to process the first service, where the target resource is a part of all service processing resources of the first node. Strengths of PP functions of different nodes in a DCN are different, and services that can be processed by the PP functions of different nodes are also different. Based on this, in this embodiment, it may be preconfigured that each node invokes a proportion of a PP function of the node to process unprocessed services. By using this implementation, each node in the pipeline only needs to process some services, which not only can improve service processing efficiency and a capability of processing a complex service by the DCN, but also can reduce PP resource usage of each node in the pipeline, and improve processing efficiency of the nodes.

In a possible implementation, the second metadata further includes an instruction added by the first node, where the instruction is used to trigger the second node to perform an operation on the data packet and the second metadata. The first node may further add some operation instructions to the second metadata, so that the second node directly performs an operation on the data packet and the second metadata based on the operation instructions.

According to a second aspect, an embodiment of this disclosure provides a data packet transmission method, including: A second node receives a data packet and second metadata, where the second metadata indicates a service processing result of the data packet by an upstream node of the second node; and the second node sends the data packet to a receiving device in response to a processing result that the second metadata indicates all services of the data packet.

In this embodiment, the second node may be a last-hop node in a pipeline. Based on this, after the second node receives the data packet and the second metadata, if all services corresponding to the data packet have been processed, the second node sends the data packet to a target server. By using this implementation, to-be-transmitted data packets can be further transmitted to the receiving device when nodes in the pipeline do not repeatedly process the processed services.

After the second node receives the data packet and the second metadata, and before the second node sends the data packet to the receiving device, the method further includes: The second node detects that the services of the data packet further include a second service, where the second service is all unprocessed services in the services of the data packet; and the second node processes the second service based on the second metadata. In some embodiments, if the services corresponding to the data packet are relatively complex, the second node may process current remaining unfinished services. Then, the second node sends the data packet to the target server. By using this implementation, to-be-transmitted data packets can be further transmitted to the receiving device when nodes in the pipeline do not repeatedly process the processed services.

According to a third aspect, this disclosure provides a data packet transmission method, where the data packet transmission method is applied to a data transmission network. A first node in the data transmission network may perform the method corresponding to the first aspect and any one of the possible implementations of the first aspect. The second node in the data transmission network may perform the method corresponding to the second aspect and any one of the possible implementations of the second aspect.

According to a fourth aspect, this disclosure provides a node. The node has a function of implementing a behavior of a first node in the foregoing method. The function may be implemented by hardware, or may be implemented by hardware executing corresponding software. The hardware or software includes one or more modules corresponding to the function. In a possible design, a structure of the first node includes a processor and a transceiver, and the processor is configured to enable the first node to perform a corresponding function in the foregoing method. The transceiver is configured to implement communication between the first node and an upstream node of the first node, and between a second node and the upstream node of the first node. The first node may further include a memory. The memory is configured to couple to the processor, and stores program instructions and data that are necessary for the first node.

According to a fifth aspect, this disclosure provides a node. The node has a function of implementing a behavior of a second node in the foregoing method. The function may be implemented by hardware, or may be implemented by hardware executing corresponding software. The hardware or software includes one or more modules corresponding to the function. In a possible design, a structure of the second node includes a processor and a transceiver, and the processor is enable the second node to perform a corresponding function in the foregoing method. The transceiver is configured to implement communication between the second node and a receiving device, and between a first node and the receiving device. The second node may further include a memory. The memory is configured to couple to the processor, and stores program instructions and data that are necessary for the second node.

According to a sixth aspect, this disclosure provides a data transmission network. The data transmission network includes a first node and a second node that are connected to each other. The first node is the node according to the fourth aspect. The second node is the node according to the fifth aspect.

According to a seventh aspect, this disclosure provides a computer readable storage medium. The computer readable storage medium stores instructions, and when the instructions are run on a computer, the computer is enabled to perform any of the foregoing possible methods.

According to the technical solutions in the embodiments of this disclosure, any hop node except a last-hop node in a pipeline in which a data packet is located may process some or all currently unprocessed services based on a service processing result corresponding to the data packet by an upstream node of the node, and further, the node sends both a service processing result by the node and a service processing result by the upstream node of the node to a downstream node of the node, so that the downstream node of the node does not repeatedly process the processed services. Therefore, not only service processing efficiency can be improved, but also PP resources of the node can be saved. In addition, each node in the pipeline processes some services, which not only can improve service processing efficiency, and reduce PP resource usage of each node in the pipeline, but also can improve a capability of processing a complex service by a data transmission network, thereby improving transmission performance of the data transmission network.

### BRIEF DESCRIPTION OF DRAWINGS

To describe the technical solutions in this disclosure more clearly, the following briefly describes the accompanying drawings required for describing the examples. It is clear that a person of ordinary skill in the art may still derive other drawings from these accompanying drawings without creative efforts.
FIG. 1 is a schematic structural diagram of a DCN according to the examples of this disclosure;
FIG. 2 is a schematic diagram of a frame structure of a data packet A according to the examples of this disclosure;
FIG. 3 is a method flowchart of an implementation of a data packet transmission method according to an example of this disclosure;
FIG. 4 is a method flowchart of another implementation of a data packet transmission method according to an example of this disclosure;
FIG. 5 is a signaling interaction diagram of a data packet transmission method according to an example of this disclosure;
FIG. 6 is a schematic diagram of an implementation scenario according to an example of this disclosure;
FIG. 7A is a schematic structural diagram of a first example of a first node device according to an example of this disclosure;
FIG. 7B is a schematic structural diagram of a second example of a first node device according to an example of this disclosure;
FIG. 8A is a schematic structural diagram of a first example of a second node device according to an example of this disclosure;
FIG. 8B is a schematic structural diagram of a second example of a second node device according to an example of this disclosure; and
FIG. 9 is a schematic structural diagram of a data transmission network according to an example of this disclosure.

### DESCRIPTION OF EMBODIMENTS

The following clearly describes the technical solutions in the examples of this disclosure with reference to the accompanying drawings in the examples of this disclosure.

Terms used in the following examples of this disclosure are merely intended to describe specific examples, but are not intended to limit the examples of this disclosure. The terms "one", "a" and "this" of singular forms used in this specification and the appended claims of the examples in this disclosure are also intended to include plural forms, unless otherwise specified in the context clearly. It should also be understood that although the terms first, second, and the like may be used to describe a class of objects in the following examples, the objects should not be limited to these terms. These terms are used only to distinguish between specific objects of this class of objects. For example, the following examples may use the terms first, second, and the like to describe nodes, but the nodes should not be limited to these terms. These terms are used only to distinguish between different nodes in a pipeline. The same applies to other classes of objects that may be described by using the terms first, second, and the like in the following examples, and details are not described herein again. In addition, in the description of the following examples, "a plurality of" means two or more.

Before the technical solutions in the examples of this disclosure are described, technical scenarios in the examples of this disclosure are first described with reference to the accompanying drawings.

The examples of this disclosure are applied to a data transmission network or system formed by connecting a plurality of switching nodes. The data transmission network or system formed by connecting a plurality of switching nodes is, for example, a DCN.

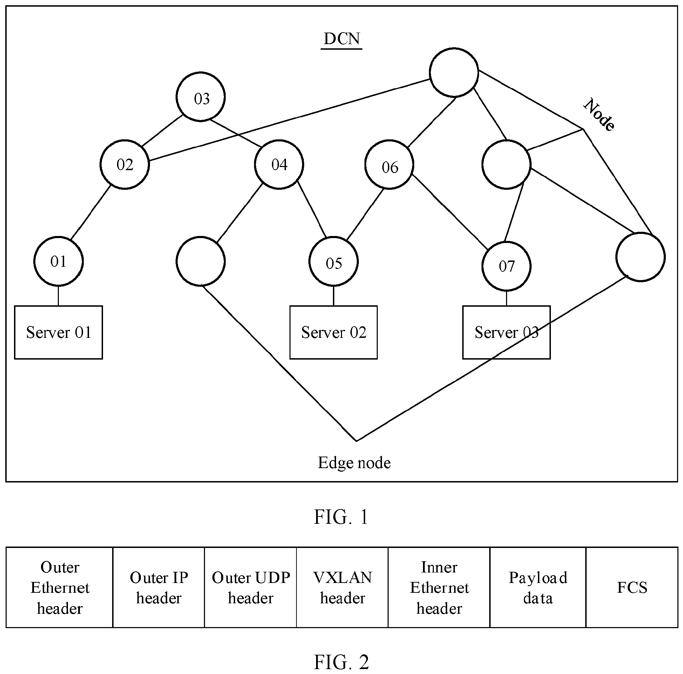

For example, refer to a DCN shown in FIG. 1. The DCN includes a plurality of nodes, and the plurality of nodes establish connections to form the DCN. Each edge node of the plurality of nodes is connected to at least one server. Any server is configured to send a data packet to another server, or receive a data packet from another server.

In the examples of this disclosure, the node may be a layer 2 switch, a layer 3 switch, a router, or the like. The server may be any serving device capable of transmitting data using a network formed by nodes.

In the examples of this disclosure, a server that sends a data packet is referred to as a source server, and a server that receives the data packet is referred to as a target server. The data packet sent by the source server to the target server is forwarded by some nodes in the DCN, and all nodes that forward the data packet form a pipeline from the source server to the target server. Each node in the pipeline may be referred to as a "hop" of node, and each hop of node may be correspondingly referred to as an i^{th}-hop node based on an order from the source server to the target server, i is a positive integer greater than or equal to 1.

For example, in FIG. 1, if a server 01 sends a data packet A to a server 02, the data packet A is transmitted from the server 01 to server 02 via a node 01, a node 02, a node 03, a node 04, and a node 05. The node 01, the node 02, the node 03, the node 04, and the node 05 form a pipeline from the server 01 to the server 02. The node 01 is a first-hop node in the pipeline, and the node 02 is a second-hop node in the pipeline. By analogy, the node 05 is a fifth-hop node in the pipeline, and is also a last-hop node in the pipeline.

It may be understood that the scenario in which the server 01 sends the data packet to the server 02 is merely for exemplary description. In some other scenarios, for example, if the server 01 sends a data packet B to a server 03, the data packet B is transmitted to the server 03 via five hops of nodes: the node 01, the node 02, the node 03, a node 06, and a node 07. Correspondingly, the node 01, the node 02, the node 03, the node 06, and the node 07 form a pipeline from the server 01 to the server 03. An order of each of the five hops of nodes in the corresponding pipeline is not described herein again. In still some other scenarios, for example, if the server 03 sends a data packet C to the server 02, the data packet C is transmitted to the server 02 via three hops of nodes: the node 07, the node 06, and the node 05. Correspondingly, the node 07, the node 06, and the node 05 form a pipeline from the server 03 to the server 02. An order of each of the three hops of nodes in the corresponding pipeline is not described herein again.

A frame structure of a data packet A is shown in FIG. 2, and includes an outer Ethernet header, an outer Internet protocol (IP) header, and an outer user datagram protocol (UDP) header,, a virtual extensible local area network (VXLAN) header, an inner Ethernet header, payload data, and a frame check sequence (FCS). For definitions of fields in the frame structure of the data packet A, refer to descriptions of protocol definitions in the Ethernet protocol or the transmission control protocol (TCP)/Internet protocol (IP). In addition, the frame structure of the data packet shown in FIG. 2 supports a definition of Internet protocol version 4 (IPv4) or Internet protocol version 6 (IPv6).

It may be understood that the frame structure shown in FIG. 2 is merely an exemplary description, and constitutes no limitation to the frame structure of the data packet in the examples of this disclosure. In another possible implementation, the frame structure of the data packet A may be alternatively different from the description in the foregoing implementation, and details are not described herein.

In actual application, a technician may set services that need to be executed in a transmission process of the data packet A. The services may include protocol analysis, information filtering, data packet encryption, table lookup, routing, and the like. The services and information required for processing corresponding services may be set in at least one of the outer Ethernet header, the outer IP header, an outer UDP header, or the VXLAN header of the data packet A, and obtained and used by the nodes in the pipeline from the server 01 to the server 02 in the transmission process of the data packet A. For example, the services and the information required for processing corresponding services may be carried in reserved bits of the packet headers (namely, the outer Ethernet header, the outer IP header, the outer UDP header, and the like) of the data packet A.

In addition, some nodes in the DCN may have a packet processing (PP) function, and the other nodes may have no PP function, or have a PP function that is too weak to be used (this case is considered as having no PP function in the examples of this disclosure). A node without a PP function usually directly transmits a transmitted data packet to a subsequent device, and a node with a PP function may invoke the PP function of the node to process services of the transmitted data packet.

The PP function is a function of processing services of a data packet, and may include functions such as protocol analysis, destination port search, index adding, encryption, and packet editing. A module that executes a PP function in a node may be a central processing unit (CPU) of the node, a programmable network processor, a pipeline using a match-action (MA) structure, or the like.

It should be noted that, in a possible implementation scenario, the nodes in the DCN are provided by different vendors. Based on this, to ensure that the nodes can correctly identify and smoothly transmit the data packet A, no matter whether any hop node of the node 01, the node 02, the node 03, the node 04, and the node 05 has processed the data packet A, the data packet A is sent to a next device. If the node 01, the node 02, the node 03, the node 04, and the node 05 all have the PP function, after receiving the data packet A, each hop node invokes the PP function of the node to process services corresponding to data packet A.

It may be understood that, in a process in which the node invokes the PP function of the node to process services, some regular services may be processed. For example, data in each layer of the packet headers of the data packet A may be read, and service information may be obtained from data of the layers of the packet headers. However, because each hop node in the pipeline receives data packet A, each hop node in the pipeline starts to process services from the regular services. In addition, each hop node cannot learn services that have been processed by other nodes before the node. Therefore, in the transmission process of the data packet A, a large quantity of services are repeatedly processed. Therefore, not only service processing efficiency is relatively low, but also a large quantity of PP resources are wasted. To resolve this problem, the examples of this disclosure provide a data packet transmission method and node.

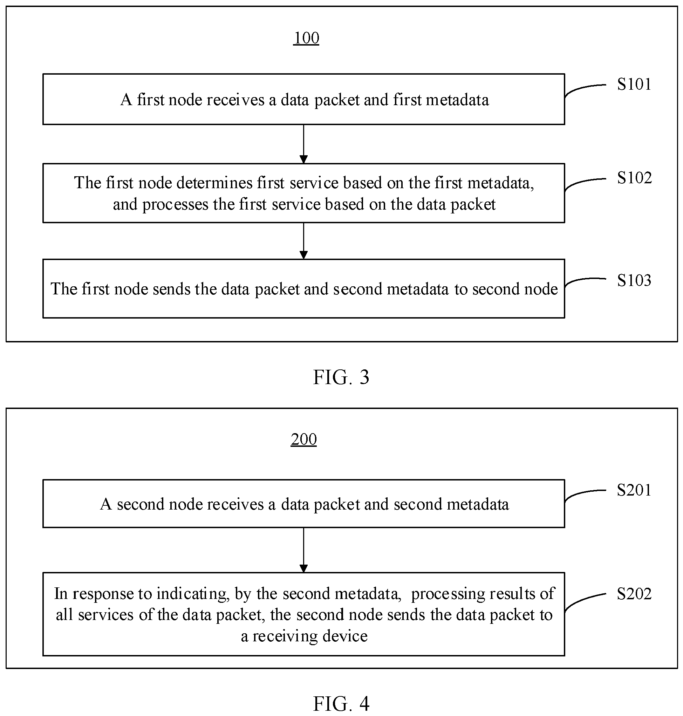

Refer to FIG. 3. FIG. 3 is a method flowchart of a data packet transmission method according to an example of this disclosure. The method 100 shown in FIG. 3 includes the following steps.

Step S 101: A first node receives a data packet and first metadata.

In this example, the first node is any node except a last-hop node in a pipeline. The pipeline is a pipeline from a source server to a target server, and the source server sends the data packet to the target server. The first metadata is used to indicate a service processing result of the data packet by an upstream node of the first node.

Step S102: The first node determines a first service based on the first metadata, and processes the first service based on the data packet.

In this example, the first service belongs to one or more unprocessed services of the data packet.

Step S 103: The first node sends the data packet and second metadata to a second node.

The second node is a next-hop node of the first node in the pipeline.

In this example, the first node may use the first metadata and a processing result of the first service as second metadata, where the second metadata may indicate a service processing result of the data packet by the first node and the service processing result of the data packet by the upstream node of the first node.

In this example, the first node is any node except the last-hop node in the pipeline. After receiving the data packet, the first node may determine and process the first service from the one or more unprocessed services of the data packet, and then, the first node uses the first node and processing results of processed services by all upstream nodes of the first node as second metadata, and sends the second metadata to the second node. In this way, the second node can learn, based on the second metadata, the processed service in the services corresponding to the data packet, so that the processed service is not repeatedly processed.

It can be learned that, according to the data packet transmission method in this example of this disclosure, if any hop node in the pipeline processes a service of a data packet, processing results of both the node and an upstream node of the node are sent to a next-hop node of the node. In this way, nodes behind the node in the pipeline can be notified of the processed service, so that the nodes behind the node do not repeatedly process the processed service. Therefore, not only service processing efficiency can be improved, but also PP resources of the node can be saved.

The method 100 illustrates a data packet transmission method for any node except the last-hop node in the pipeline. The following describes a data packet transmission method of the last-hop node in the pipeline.

Refer to FIG. 4. FIG. 4 is a method flowchart of another implementation of a data packet transmission method according to an example of this disclosure. The method 200 shown in FIG. 4 includes the following steps.

Step S201: A second node receives a data packet and second metadata.

In this example, the second node is, for example, a last-hop node in a pipeline. The pipeline is a pipeline from a source server to a target server, and the source server sends the data packet to the target server. The second metadata is used to indicate a service processing result of the data packet by an upstream node of the second node.

Step S202: The second node sends the data packet to a receiving device in response to a processing result that the second metadata indicates all services of the data packet.

The receiving device may be a target server.

According to the method 100 and step S201, the second metadata only notifies the node of a currently processed service, and the source server aims to transmit the data packet to the target server. Based on this, after learning that all services of the data packet are processed, the second node sends the data packet to the target server. Certainly, if not all services corresponding to the data packet are processed, the second node needs to process a remaining unprocessed service, and then sends the data packet to the target server.

It can be learned that, in the data packet transmission method in this example of this disclosure, to-be-transmitted data packets can be further transmitted to the receiving device without repeatedly processing the processed services by nodes in the pipeline.

The foregoing describes the examples of this disclosure from the perspective of the nodes, and the following describes the examples of this disclosure from the perspective of a data transmission network.

First, "metadata (MD)" described in the examples of this disclosure is described. To implement the technical solutions in the examples of this disclosure, a related technician has predefined MD. In the examples of this disclosure, the MD may include a processing result of a processed service. For example, a data packet is a packet having a multi-layer encapsulation, and the MD may include a processing result that a node strips an outer encapsulation of the data packet. For another example, the data packet is a segment routing (SR) packet that carries a multi-layer switching information label, and the MD may include a quantity of layers that have been processed by the node and a processing result of each layer, and related information that can guide how to forward (forwarding) the data packet, such as an encapsulation index traversing an IP network tunnel and a multicast replication result. In addition, the MD may further include information about a remaining unprocessed service, start phase information of the remaining unprocessed service, an instruction generated by the node based on to-be-processed services, and the like. The instruction is, for example, a forwarding instruction.

In a possible implementation, the MD may be carried at a specific position of the data packet, and sent together with the data packet. For example, FIG. 2 illustrates a position between the outer IP header and the outer UDP header. The specific position is mutually agreed between the nodes. In another possible implementation, the MD may be carried in an extended field of a standard protocol, for example, in an extended field of the extensible VXLAN header.

It may be understood that the carrying of the MD is merely an exemplary description, and constitutes no limitation to the manner of carrying the MD in the examples of this disclosure. In another possible implementation, based on different frame structures of data packets, the manner of carrying the MD may further be flexibly set. Details are not described herein.

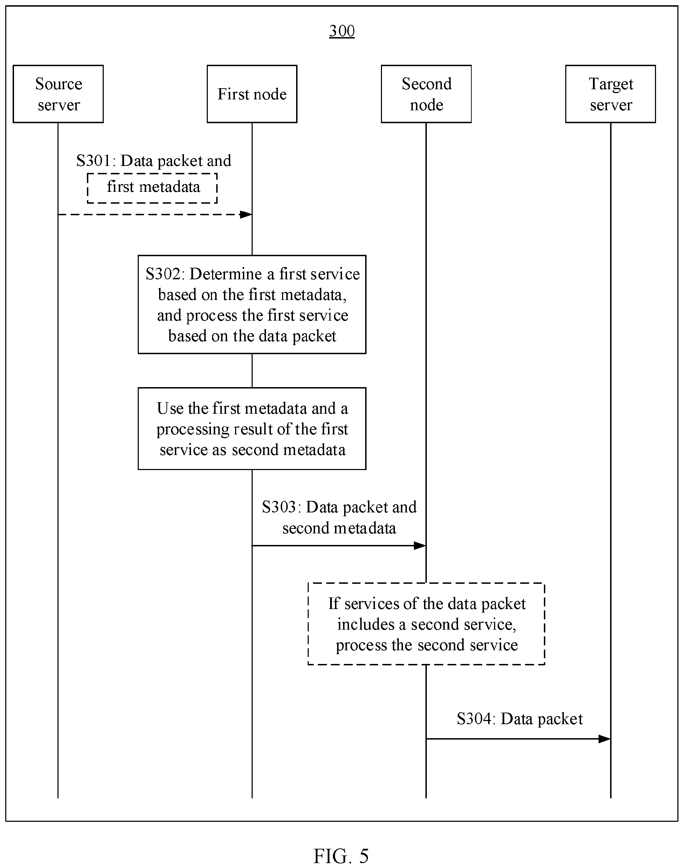

Further, refer to FIG. 5. FIG. 5 is a signaling interaction diagram of a data packet transmission method according to an example of this disclosure. The method 300 shown in FIG. 5 includes the following steps.

Step S301: A first node receives a data packet and first metadata.

The first node is any node except a last-hop node in a pipeline from a source server to a target server. The data packet is a data packet sent by the source server to the target server.

In an optional example, the first node is a first-hop node in the pipeline. In this case, the first node receives the data packet from the source server, and the first metadata is empty. In another optional example, the first node is not a first-hop node in the pipeline. In this case, the first node receives the data packet and the first metadata from a previous-hop node of the first node. The first metadata indicates a service processing result of the data packet by an upstream node of the first node.

It may be understood that the first metadata may further include information about a currently unprocessed service of the data packet and/or start information of the one or more unprocessed services. The "currently" in this step may indicate a moment at which the first node receives the first metadata.

Step S302: The first node determines a first service based on the first metadata, and processes the first service based on the data packet.

The first service belongs to one or more unprocessed services of the data packet.

It may be understood that services corresponding to the data packet are set by a related technician. With reference to an average strength of the PP functions of the nodes in the DCN, in this example of this disclosure, a service that can be completely processed by a single node by invoking a PP function of the single node is referred to as a simple service. The simple service is, for example, an addressing service. In this example of this disclosure, a service that cannot be completely processed by a single node by invoking a PP function of the single node is referred to as a complex service. The complex service includes, for example, services such as layer 3 forwarding, security setting, firewall setting, traffic setting, and load status analysis. Based on this, in a possible implementation, the first service may be all services corresponding to the data packet. In another possible implementation, the first service may be some services corresponding to the data packet.

In addition, in a possible implementation, the first service may be a subsequent service of the processed service indicated by the first metadata. For example, if the processed service indicated by the first metadata is a layer 1 forwarding service in three layers of forwarding services, the first service is a layer-2 forwarding service in the three layers of forwarding services. In another possible implementation, the first service may be a service independent of the processed service indicated by the first metadata. For example, if the processed service indicated by the first metadata is load status analysis, the first service is security setting.

In an actual operation process, in some examples, a technician may preconfigure to-be-processed services of the nodes based on the PP functions of the nodes in the pipeline, so that after each node receives a data packet and metadata that are sent by a previous-hop node of the node, the node identifies a service indicated by the preset configuration information, and then executes the corresponding service. The to-be-processed services corresponding to the nodes in the pipeline are some of the services corresponding to the data packet, and a service corresponding to any node is different from that of another node. For example, with reference to this example, a technician preconfigures a service "firewall setting" for the first node to process, and in response to the received data packet and first metadata, the first node may identify the service "firewall setting" from the preset configuration information, and further execute the service "firewall setting". The service "firewall setting" is the first service in this step.

In some other examples, after processing some services, each node in the pipeline may configure information or an instruction of a service that needs to be processed by a next-hop node of the node, and add the information or the instruction to to-be-sent metadata. The next-hop node of the node may parse the received metadata to obtain configuration information or an instruction, to determine, based on the corresponding information or instruction, a service that needs to be processed, and further process a service indicated by the corresponding information or instruction. For example, with reference to this example, the layer 1 forwarding service in the three layers of forwarding services has been processed by the upstream node of the first node, and the first metadata includes configuration information for processing the layer 2 forwarding service in the three layers of forwarding services. Further, the first node parses the first metadata to obtain the configuration information, and determines the service "layer 2 forwarding service in the three layers of forwarding services" based on the configuration information. Then, the first node processes the "layer 2 forwarding service in the three layers of forwarding services". Correspondingly, the "layer 2 forwarding service in the three layers of forwarding services" is the first service in this step.

It may be understood that, given the implementation logic of this example of this disclosure, unless there is an example to the contrary, in the foregoing two examples of configuring a service corresponding to each node, the PP function of each node matches the configured service volume and the configured service content.

Further, the first node may obtain, from a packet header of the data packet, information required for processing the first service, and further process the first service based on the corresponding information.

It can be learned that by using this implementation, not only all nodes in the pipeline process some services, but also each node does not need to detect a service that can be processed by the node, thereby simplifying an operation procedure of each node.

Step S303: The first node sends the data packet and second metadata to a second node.

The second node is a next-hop node of the first node in the pipeline. Based on this, if the first node is not a penultimate-hop node in the pipeline, an operation procedure of the second node is similar to that described in step S301 to step S303, and details are not described herein again. If the first node is the penultimate-hop node in the pipeline, the second node is the last-hop node in the pipeline, and the second node performs step S304. In addition, in this example of this disclosure, the first node uses the first metadata and the processing result of the first service as the second metadata. In other words, the second metadata includes a service processing result of the data packet by the first node and the service processing result of the data packet by the upstream node of the first node.

With reference to the description of step S301, in a first possible example, if the first metadata is empty, the first node processes the first service based on the data packet, and uses the processing result of the first service as the second metadata. In a second possible example, the first metadata may include a result of a processed service by the upstream node of the first node, information about a currently unprocessed service, start information of the first service, and the like. In this case, the first node may determine the first service based on the first metadata, and then process the first service. Further, the first node may generate the second metadata based on both the processing result corresponding to the first metadata and the processing result of the first service by the first node, or the first node generates one piece of metadata based on the processing result of the first service by the first node, and use the metadata and the first metadata together as the second metadata.

It may be understood that, in the second possible example, in a possible implementation, the first service may be a remaining unprocessed service of the data packet, and correspondingly, the second metadata may indicate processing results of all services of the data packet. In another possible implementation, the first service is still some services of the one or more unprocessed services of the data packet. Correspondingly, the second metadata may further include information about the one or more unprocessed services.

Further, if the second metadata indicates processing results of all services of the data packet, or the second node has no PP capability, the first node may further add a forwarding instruction to the second metadata, where the forwarding instruction is used to trigger the second node to directly forward the data packet and the second metadata.

Step S304: The second node sends the data packet to the target server in response to a processing result that the second metadata indicates all services of the data packet.

The second node may detect, based on the second metadata, whether all services corresponding to the data packet have been processed, and if all services corresponding to the data packet have been processed, the second node sends the data packet to the target server. If the second node detects that the services of the data packet further include a second service, the second node processes the second service, and then sends the data packet to the target server. In this step, the second service is all unprocessed services in the services of the data packet.

It may be understood that the last-hop node in the pipeline may not identify that the node is a position in the pipeline. Based on this, the node may perform an operation based on a program set by a related technician. Alternatively, in a possible implementation, a total hop count of the nodes in the pipeline may be set in a to-be-transmitted data packet, and after receiving the corresponding data packet, each hop node in the pipeline decreases the total hop count by 1. After the last-hop node decreases the total hop count by 1, the total hop count is 0. Based on this, in this example, the total hop count 0 may indicate that the corresponding node is the last-hop node in the pipeline, and then the node is triggered to perform the operation in step S304.

It may be understood that the foregoing implementation in which the node determines the position in the pipeline by using the total hop count is merely an exemplary description, and constitutes no limitation to this example of this disclosure. In some other implementations, the node may further determine the position of the node in the pipeline in a manner different from the foregoing manner. For example, each hop node in the pipeline may maintain a topology diagram of the pipeline. The topology diagram shows an identifier of each hop node, so that each hop node can determine a position of the node in the pipeline by using the topology diagram.

It can be learned that, according to the data packet transmission method in this example of this disclosure, any hop node in the pipeline can learn, by using metadata, a service processed by an upstream node of the node, so that the processed service is not repeatedly processed. In addition, each node in the pipeline processes some services, so that not only service processing efficiency can be improved, and PP resource usage of each node in the pipeline can be reduced, but also a capability of processing a complex service by a DCN can be improved, thereby improving transmission performance of the DCN.

In addition, it should be noted that strengths of PP functions of different nodes in the DCN are different, and services that can be processed by PP functions of different nodes are also different. Based on this, in some examples, each node having a PP function in the pipeline is configured to invoke a proportion of the PP function of the node to process unfinished services. The proportion is, for example, 60%, 90% or 100%. In some other examples, each node having a PP function in the pipeline is configured to separately execute one or more services corresponding to the corresponding node. Based on this, in the method 100 and/or the method 300, for example, the first node may invoke a target resource to process the first service. The target resource is a part of all service processing resources of the first node.

By using this implementation, each node in the pipeline processes some services, which not only can improve service processing efficiency and a capability of processing a complex service by the DCN, but also can reduce PP resource usage of each node in the pipeline, and improve processing efficiency of the nodes.

The following describes the data packet transmission method in the examples of this disclosure with reference to different implementation scenarios.

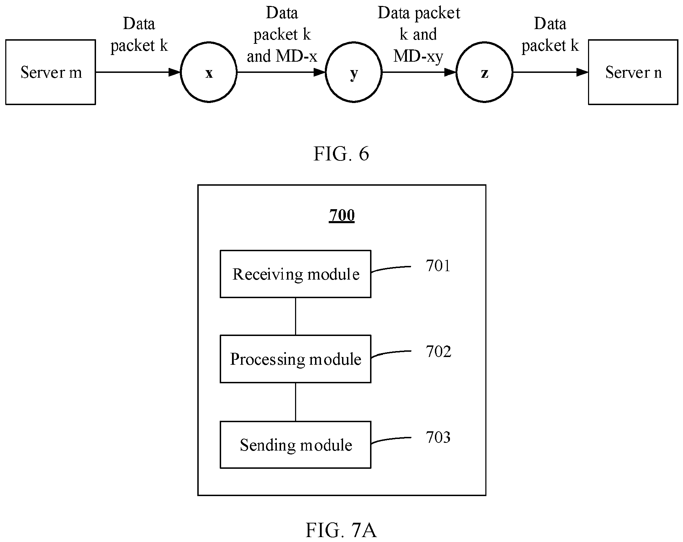

For example, FIG. 6 shows an implementation scenario of an example of this disclosure. A server m sends a data packet k to a server n. The data packet k is transmitted to the server n via a node x, a node y, and a node z. The node x, the node y, and the node z form a pipeline from the server m to the server n, the node x is a first-hop node in the pipeline, the node y is a second-hop node in the pipeline, and the node z is a third-hop (last-hop) node in the pipeline. In addition, in this example, the node x, the node y, and the node z may agree to carry MD in a VXLAN header.

It can be learned from the foregoing description of the PP function that the node without a PP function directly forwards the received data packet and metadata. Details are not described again in this example of this disclosure. With reference to the implementation scenario shown in FIG. 6, for example, the node x, the node y, and the node z all have a PP function, and a technician has preconfigured services that need to be processed by the node x, the node y, and the node z respectively.

For example, the first node is the node x shown in FIG. 6. In this example, the first metadata is empty, and the data packet transmission method in this example of this disclosure is as follows.

The node x receives the data packet k transmitted by the server m. Then, the node x may parse the data packet k layer by layer, and obtain, from a packet header of the data packet k, information about services corresponding to the data packet k. Further, the node x may identify a first service indicated by preset configuration information, and invoke a PP function of the node x to process the first service. The first service belongs to the services. Then, the node x generates MD-x based on a result obtained by processing the first service by the node x. In this example, the MD-x is the second metadata described in the method 100 and the method 300. Further, the node x adds the MD-x to an extended field of an extensible VXLAN header of the data packet k, and sends the data packet k and the MD-x to the node y.

In a possible implementation, if the service is a simple service, the first service is all services. In this way, the MD-x may further include a forwarding instruction, and the forwarding instruction is used to trigger the node y and the node z to directly perform a forwarding operation. In another possible implementation, if the service is a complex service, the first service is some services of the services, for example, a layer 1 forwarding service in three layers of forwarding services. In this case, some or all unprocessed services of the services may be processed by the node y based on the MD-x.

For example, the first node is the node y shown in FIG. 6, and the data packet transmission method in this example of this disclosure is as follows.

With reference to an execution process of the node x, in this example, the node y receives the data packet k and the metadata MD-x. In this example, the MD-x may correspond to the first metadata described in the method 100 and the method 300. With reference to a service processing result of the node x, this example may include the following two implementation manners.

Implementation 1: If the MD-x indicates processing results of all services, the node y obtains the MD-x from the VXLAN header of the data packet k, and then may learn, based on the MD-x, that all services have been processed. Further, the node y directly forwards the data packet k and the MD-x to the node z. Alternatively, if the MD-x includes a forwarding instruction, the node y may directly forward the data packet k and the MD-x to the node z in response to the forwarding instruction. It can be learned that, in this implementation, the second metadata and the first metadata are the same, and are both the MD-x.

Implementation 2: If the MD-x indicates processing results of some services of the data packet k, the node y first determines, based on preset configuration information in the node y, services that need to be executed by the node y. In this example, the services may be described as a first service corresponding to the node y. The first service is one or more unprocessed services of the services. The node y obtains the MD-x from the VXLAN header of the data packet k, and then may learn, from the MD-x, processing results of some services by the node x. Further, the node y learns, from a packet header of the data packet, information corresponding to the first service, and then processes the first service based on the processing result of the node x, to obtain a processing result of the first service. Further, the node y generates MD-xy based on the MD-x and the processing result of the first service, replaces the MD-x with MD-xy, and adds the MD-xy to the VXLAN header of the data packet k. Further, the node y sends the data packet k and the MD-xy to the node z. In this example, the MD-xy corresponds to the second metadata in the method 100.

In addition, in another implementation, the node y may generate MD-y based on only the processing result of the first service, and further use the MD-y and the MD-x as the second metadata.

It can be learned that the node in the pipeline from the source server to the target server can learn, based on the received metadata, services that have been processed in the services, so that the node does not repeatedly process the processed services. In this way, on one hand, PP resources can be saved; on the other hand, the node processes only one or more unprocessed services, thereby improving service efficiency of the PP function.

In a possible implementation, if the MD-xy indicates all services corresponding to the data packet k, the MD-xy may further include a forwarding instruction, and the forwarding instruction is used to trigger the node z to directly perform a forwarding operation. In another possible implementation, if the services corresponding to the data packet k further include a second service, and the second service is not processed, the second service may be processed by the node z based on the MD-xy.

For example, the node z shown in FIG. 6 may be used as a second node in the method 200 and the method 300.

Specifically, with reference to an execution process of the node y, after the data packet k and the MD-xy are received, the data packet transmission method of the node z may include the following two implementations.

Implementation 1: If the MD-xy indicates processing results of all services, the node z may transmit the data packet k to the server n. Alternatively, if the MD-xy includes a forwarding instruction, the node z may transmit the data packet k to the server n in response to the forwarding instruction.

Implementation 2: If the services corresponding to the data packet k further includes a second service, the node z obtains the MD-xy from the VXLAN header of the data packet k, and then processes the second service based on the MD-xy. After processing the second service, the node z transmits the data packet k to the server n.

The data packet k configured by the server m in FIG. 6 includes a total hop count 3. Further, after receiving the data packet k, the node x decreases the total hop count by 1, so that the total hop count corresponding to the data packet k is 2. After receiving the data packet k, the node y continues to decrease the total hop count by 1, so that the total hop count corresponding to the data packet k is 1. Similarly, after receiving the data packet k, the node z decreases the total hop count by 1, to obtain the total hop count 0. Further, in response to the total hop count being 0, the node z performs the operation of the foregoing example.

In addition, in the example shown in FIG. 6, the node x, the node y, and the node z are all configured to invoke 60% of a PP function of the node x, the node y, and the node z to process unfinished services.

It can be learned that, by using this implementation, each node in the pipeline processes some services, which not only can improve service processing efficiency and a capability of processing a complex service by a data transmission network, but also can reduce PP resource usage of each node in the pipeline, and improve processing efficiency of the nodes.

In addition, an egress of the source server and an ingress of the target server may be a network interface card (NIC). The NIC usually has a certain PP function, and the NIC may also invoke the PP function of the NIC to process a service. Based on this, in this example of this disclosure, the NIC may be considered as a node. For example, the NIC of the egress of the source server is considered as a first-hop node in the pipeline, and the NIC of the ingress of the target server is considered as a last-hop node in the pipeline. For example, with reference to the example shown in FIG. 6, the node x may be a NIC of an egress of the server m, and the node z may be a NIC of an ingress of the server n.

The PP function of the NIC is limited. If a data packet is transmitted based on an existing transmission method, congestion or packet loss may occur on the NIC due to the limited PP function. Based on this, by using the technical solutions in this example of this disclosure, a phenomenon of congestion or packet loss caused by the limited PP function of the NIC can be avoided, thereby improving transmission performance of the data packet.

It may be understood that the data packet transmission method shown in FIG. 6 is merely an exemplary description of this example of this disclosure, and does not constitute a limitation on the data packet transmission method in the examples of this disclosure. In some other examples, the pipeline may be more complex, and the pipeline includes more nodes. However, a transmission process of the to-be-transmitted data packet is similar to that described in the foregoing examples, and details are not described herein again in this example.

In conclusion, according to the data packet transmission method in this example of this disclosure, any hop node in the pipeline can learn, by using metadata, services processed by an upstream node of the node, so that the processed service is not repeatedly processed. In addition, each node in the pipeline processes some services, so that not only service processing efficiency can be improved, and PP resource usage of each node in the pipeline can be reduced, but also a capability of processing a complex service by a data transmission network can be further improved, thereby improving transmission performance of the data transmission network.

In the foregoing examples provided in this disclosure, solutions of the data packet transmission method provided in the examples of this disclosure are separately described from perspectives of the nodes and interaction between the nodes. To implement the foregoing functions, the nodes, for example, the first node and the second node, include a corresponding hardware structure and/or software module for executing the functions. A person of ordinary skill in the art should easily be aware that, in combination with the examples described in the examples disclosed in this specification, steps may be implemented by hardware or a combination of hardware and computer software. Whether a function is performed by hardware or hardware driven by computer software depends on particular applications and design constraints of the technical solutions. A technician may use different methods to implement the described functions for each particular application, but it should not be considered that the implementation goes beyond the scope of this disclosure.

For example, if the node implements a corresponding function by using a software module, as shown in FIG. 7A, the first node 700 may include a receiving module 701, a processing module 702, and a sending module 703.

In an example, the first node 700 may be configured to perform the operation of the first node in FIG. 3 and FIG. 5, and the operation of node x and node y in FIG. 6.

For example, the receiving module 701 is configured to receive a data packet and first metadata, where the first metadata is used to indicate a service processing result of the data packet by an upstream node of the first node. The processing module 702 is configured to determine a first service based on the first metadata, and process the first service based on the data packet, where the first service belongs to one or more unprocessed services of the data packet. The sending module 703 is configured to use the first metadata and a processing result of the first service as second metadata, and send the data packet and the second metadata to a second node. The second metadata includes a service processing result of the data packet by the first node and the service processing result of the data packet by the upstream node of the first node.

It can be learned that, according to the data packet transmission method in this example of this disclosure, if any hop node in a pipeline has processed a service of the data packet, a processing result of the processed service and the data packet are sent together to a subsequent node of the node. In this way, nodes behind the node in the pipeline can be notified of the processed service, so that the nodes behind the node do not repeatedly process the processed service. Therefore, not only service processing efficiency can be improved, but also PP resources of the node can be saved.

Optionally, the processing module 702 is further configured to: in response to the received first metadata, identify the first service indicated by preset configuration information, where the preset configuration information indicates a service that is of a data packet and that needs to be processed by the first node.

Optionally, the processing module 702 is further configured to parse the first metadata to obtain configuration information, where the configuration information indicates the first service; and determine the first service based on the configuration information.

Optionally, the first metadata further includes at least one of the following: information about the one or more unprocessed services of the data packet or start information of the first service, where the start information indicates a start process for processing the first service.

Optionally, the processing module 702 is configured to invoke a target resource to process the first service, where the target resource is a part of all service processing resources of the first node.

Optionally, the second metadata further includes an instruction added by the first node, where the instruction is used to trigger the second node to perform an operation on the data packet and the second metadata.

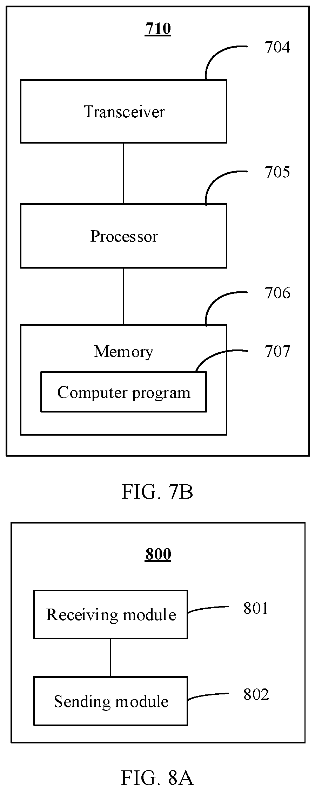

FIG. 7B is another possible schematic structural diagram of the first node 700 in the foregoing example. A first node 710 includes a transceiver 704, a processor 705, and a memory 706. As shown in FIG. 7B, the memory 706 is configured to couple to the processor 705, and stores a computer program 707 necessary for the first node 710.

For example, in an example, the processor 705 is configured for other operations or functions of the first node 710. The transceiver 704 is configured to implement communication between the first node 710 and an upstream node of the first node 710.

In another example, the processor 705 is configured for other operations or functions of the first node 710. The transceiver 704 is configured to implement communication between the first node 710 and a second node.

As shown in FIG. 8A, this disclosure further provides a second node 800. The second node 800 may include a receiving module 801 and a sending module 802.

In an example, the second node 800 may be configured to perform the operation of the second node in FIG. 4 and FIG. 5, and the operation of node z in FIG. 6.

For example, the receiving module 801 is configured to receive a data packet and second metadata, where the second metadata indicates a service processing result of the data packet by an upstream node of a second node. The sending module 802 is configured to send the data packet to a receiving device.

It can be learned that, in the data packet transmission method in the examples of this disclosure, the data packet can be further transmitted to the receiving device without repeatedly processing the services by the nodes in the pipeline.

Optionally, the second node 800 further includes a processing module. The processing module is configured to detect that the services of the data packet further include a second service, where the second service is all unprocessed services in the services of the data packet; and is further configured to process the second service based on the second metadata.

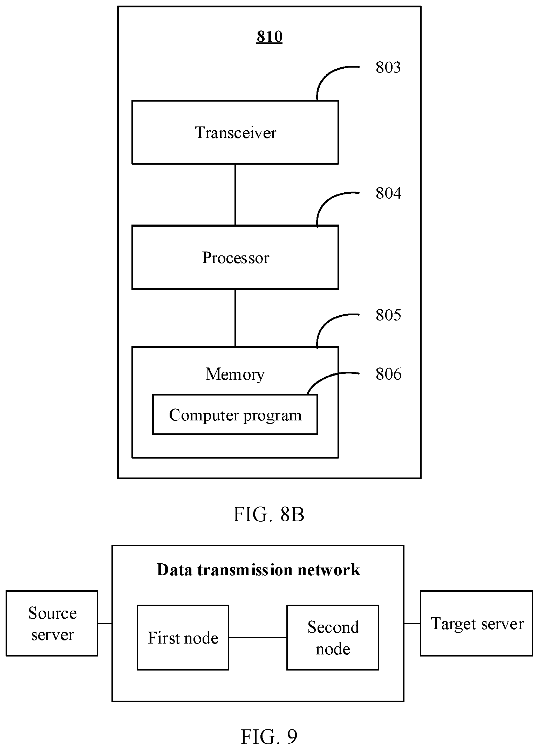

FIG. 8B is another possible schematic structural diagram of the second node 800 in the foregoing example. A second node 810 includes a transceiver 803, a processor 804, and a memory 805. As shown in FIG. 8B, the memory 805 is configured to couple to the processor 804, and stores a computer program 806 necessary for the second node 810.

For example, in an example, the processor 804 is configured for other operations or functions of the second node 810. The transceiver 803 is configured to implement communication between the second node 810 and a first node.

In another example, the processor 804 is configured for other operations or functions of the second node 810. The transceiver 803 is configured to implement communication between the second node 810 and a receiving device.

An example of this disclosure further provides a data transmission network. The data transmission network includes a first node and a second node that are connected to each other. The first node is configured to connect to a source server, and the second node is configured to connect to a target server. The first node may be the node provided in the example corresponding to FIG. 7A or FIG. 7B. The second node may be the node provided in the example corresponding to FIG. 8A or FIG. 8B. The data transmission network is used to perform the method in the example corresponding to FIG. 5.

During specific implementation, corresponding to the first node and the second node, this disclosure further provides a computer storage medium. The computer storage medium disposed in any device may store a program. When the program is executed, some or all of the steps in the examples including the data packet transmission methods provided in FIG. 3 to FIG. 6 may be implemented. The storage medium in any device may be a magnetic disk, an optical disc, a read-only memory (ROM), a random access memory (RAM), or the like.

One or more of the foregoing modules or units may be implemented by using software, hardware, or a combination thereof. When any one of the foregoing modules or units is implemented by using software, the software exists in a manner of computer program instructions and is stored in a memory. The processor may be configured to execute the program instructions and implement the foregoing method procedure. The processor may include but is not limited to at least one of the following: various computing devices that run software, such as a central processing unit (CPU), a microprocessor, a digital signal processor (DSP), a microcontroller unit (MCU), or an artificial intelligence processor. Each computing device may include one or more cores for executing software instructions for operations or processing. The processor may be built in an system on chip (SoC) or an application specific integrated circuit (ASIC), or may be an independent semiconductor chip. In addition to the cores for executing software instructions for operations or processing, the processor may further include a necessary hardware accelerator, such as a field programmable gate array (FPGA), a programmable logic device (PLD), or a logic circuit that implements dedicated logic operations.

When the foregoing modules or units are implemented by using hardware, the hardware may be any one or any combination of a CPU, a microprocessor, a DSP, an MCU, an artificial intelligence processor, an ASIC, an SoC, an FPGA, a PLD, a dedicated digital circuit, a hardware accelerator, or a non-integrated discrete device, and may run necessary software or be independent of software to perform the foregoing method procedure.

When the foregoing modules or units are implemented by using software, the foregoing modules or units may be implemented completely or partially in a form of a computer program product. The computer program product includes one or more computer instructions. When the computer program instructions are loaded and executed on a computer, the procedure or functions according to the examples of this disclosure are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

It should be understood that sequence numbers of the foregoing processes do not mean execution sequences in various examples of this disclosure. The execution sequences of the processes should be determined according to functions and internal logic of the processes, and should not be construed as any limitation on the implementation processes of the examples.

The examples in this specification are all described in a progressive manner. For same or similar parts of the examples, refer to each other. Each example focuses on a difference from other examples. Especially, apparatus and system examples are basically similar to a method example, and therefore are described briefly. For related parts, refer to descriptions of the method example.

## Claims

1. A data packet transmission method, comprising:
receiving, by a first node (700, 710), a data packet and first metadata, wherein the first metadata is used to indicate a service processing result of the data packet by an upstream node of the first node (700, 710);
determining, by the first node (700, 710), a first service based on the first metadata, and processing the first service based on the data packet, wherein the first service belongs to one or more unprocessed services of the data packet; and
using, by the first node (700, 710), the first metadata and a processing result of the first service as second metadata, and sending the data packet and the second metadata to a second node (800, 810), wherein the second metadata comprises a service processing result of the data packet by the first node (700, 710) and the service processing result of the data packet by the upstream node of the first node (700, 710),
wherein the first metadata comprises information about one or more unprocessed services of the data packet, and
wherein the first node (700, 710) is any node except a last-hop node in a pipeline of the data packet and the second node (800, 810) is a next-hop node of the first node (700, 710).

2. The data packet transmission method according to claim 1, wherein the determining, by the first node (700, 710), a first service based on the first metadata comprises:
in response to receiving the first metadata, identifying, by the first node (700, 710), the first service indicated by preset configuration information, wherein the preset configuration information indicates one or more services that are of a data packet and that needs to be processed by the first node (700, 710).

3. The data packet transmission method according to claim 1, wherein the determining, by the first node (700, 710), a first service based on the first metadata comprises:
parsing, by the first node (700, 710), the first metadata to obtain configuration information, wherein the configuration information indicates the first service; and
determining, by the first node (700, 710), the first service based on the configuration information.

4. The data packet transmission method according to any of claims 1 to 3, wherein the first node (700, 710) notifies the second node (800, 810) of the processed services so that the second node (800, 810) does not repeatedly process the processed services.

5. The data packet transmission method according to any one of claims 1 to 4, wherein the processing, by the first node (700, 710), the first service based on the data packet comprises:
invoking, by the first node (700, 710), a target resource to process the first service, wherein the target resource is a part of all service processing resources of the first node (700, 710).

6. The data packet transmission method according to claim 1, wherein the second metadata further comprises an instruction added by the first node (700, 710), and the instruction is used to trigger the second node (800, 810) to perform an operation on the data packet and the second metadata.

7. A data packet transmission method, comprising:
receiving, by a second node (800, 810), a data packet and second metadata, wherein the second metadata indicates a service processing result of the data packet by an upstream node of the second node (800, 810); and
in response to indicating, by the second metadata, processing results of all services of the data packet, sending, by the second node (800, 810), the data packet to a receiving device,
wherein after the receiving, by the second node (800, 810), the data packet and the second metadata, and before the sending, by the second node (800, 810), the data packet to the receiving device, the method further comprises:
detecting, by the second node (800, 810), that services of the data packet further comprise a second service, wherein the second service indicates all unprocessed services in the services of the data packet; and
processing, by the second node (800, 810), the second service based on the second metadata.

8. The data packet transmission method according to claim 1, applied to the data transmission network, wherein the data transmission network comprises the first node (700, 710) and the second node (800, 810), and the method further comprises:
in response to indicating, by the second metadata, processing results of all services of the data packet, sending, by the second node (800, 810), the data packet to a receiving device.

9. The data packet transmission method according to claim 7, applied to the data transmission network, wherein the data transmission network comprises a first node (700, 710) and the second node (800, 810), wherein before receiving, by the second node (800, 810), the data packet and the second metadata, the method comprises:
receiving, by the first node (700, 710), the data packet and first metadata, wherein the first metadata is used to indicate a service processing result of the data packet by an upstream node of the first node (700, 710);
determining, by the first node (700, 710), a first service based on the first metadata, and processing the first service based on the data packet, wherein the first service belongs to one or more unprocessed services of the data packet; and
using, by the first node (700, 710), the first metadata and a processing result of the first service as second metadata, and sending the data packet and the second metadata to the second node (800, 810), wherein the second metadata comprises a service processing result of the data packet by the first node (700, 710) and the service processing result of the data packet by an upstream node of the first node (700, 710).

10. The data packet transmission method according to claim 9, wherein the determining, by the first node (700, 710), a first service based on the first metadata comprises:
in response to receiving the first metadata, identifying, by the first node (700, 710), the first service indicated by preset configuration information, wherein the preset configuration information indicates a service that is of a data packet and that needs to be processed by the first node (700, 710).

11. The data packet transmission method according to claim 9, wherein the determining, by the first node (700, 710), a first service based on the first metadata comprises:
parsing, by the first node (700, 710), the first metadata to obtain configuration information, wherein the configuration information indicates the first service; and
determining, by the first node (700, 710), the first service based on the configuration information.

12. The data packet transmission method according to any one of claims 9 to 11, wherein the first metadata further comprises at least one of the following:
information about one or more unprocessed services of the data packet or start information of the first service, wherein the start information indicates a start process for processing the first service.

13. The data packet transmission method according to claims 9 to 12, wherein the processing, by the first node (700, 710), the first service based on the data packet comprises:
invoking, by the first node (700, 710), a target resource to process the first service, wherein the target resource is a part of all service processing resources of the first node (700, 710).

14. The data packet transmission method according to claim 8 or 9, wherein the second metadata further comprises an instruction added by the first node (700, 710), and the instruction is configured to trigger the second node (800, 810) to perform an operation on the data packet and the second metadata.

15. The data packet transmission method according to claim 8, wherein after the receiving, by the second node (800, 810), the data packet and the second metadata, and before the sending, by the second node (800, 810), the data packet to a receiving device, the method further comprises:
detecting, by the second node (800, 810), that services of the data packet further comprise a second service, wherein the second service indicates all unprocessed services in the services of the data packet; and
processing, by the second node (800, 810), the second service based on the second metadata.

## Patentansprüche

1. Datenpaketübertragungsverfahren, umfassend:
Empfangen eines Datenpakets und erster Metadaten durch einen ersten Knoten (700, 710), wobei die ersten Metadaten verwendet werden, um ein Dienstverarbeitungsergebnis des Datenpakets durch einen dem ersten Knoten (700, 710) vorgelagerten Knoten anzugeben;
Bestimmen eines ersten Dienstes basierend auf den ersten Metadaten und Verarbeiten des ersten Dienstes basierend auf dem Datenpaket durch den ersten Knoten (700, 710), wobei der erste Dienst zu einem oder mehreren unverarbeiteten Diensten des Datenpakets gehört; und
Verwenden der ersten Metadaten und eines Verarbeitungsergebnisses des ersten Dienstes als zweite Metadaten und Senden des Datenpakets und der zweiten Metadaten an einen zweiten Knoten (800, 810) durch den ersten Knoten (700, 710), wobei die zweiten Metadaten ein Dienstverarbeitungsergebnis des Datenpakets durch den ersten Knoten (700, 710) und das Dienstverarbeitungsergebnis des Datenpakets durch den dem ersten Knoten (700, 710) vorgelagerten Knoten umfassen,
wobei die ersten Metadaten Informationen über einen oder mehrere unverarbeitete Dienste des Datenpakets umfassen, und
wobei es sich bei dem ersten Knoten (700, 710) ausgenommen von einem Last-Hop-Knoten um einen beliebigen Knoten in einer Pipeline des Datenpakets handelt und bei dem zweiten Knoten (800, 810) um einen Next-Hop-Knoten des ersten Knotens (700, 710) handelt.

2. Datenpaketübertragungsverfahren nach Anspruch 1, wobei das Bestimmen eines ersten Dienstes durch den ersten Knoten (700, 710) basierend auf den ersten Metadaten Folgendes umfasst:
Identifizieren des durch voreingestellte Konfigurationsinformationen angegebenen ersten Dienstes durch den ersten Knoten (700, 710) als Reaktion auf das Empfangen der ersten Metadaten, wobei die voreingestellten Konfigurationsinformationen einen oder mehrere Dienste angeben, die zu einem Datenpaket gehören und durch den ersten Knoten (700, 710) verarbeitet werden müssen.

3. Datenpaketübertragungsverfahren nach Anspruch 1, wobei das Bestimmen eines ersten Dienstes durch den ersten Knoten (700, 710) basierend auf den ersten Metadaten Folgendes umfasst:
Parsen der ersten Metadaten durch den ersten Knoten (700, 710), um Konfigurationsinformationen zu erlangen, wobei die Konfigurationsinformationen den ersten Dienst angeben; und Bestimmen des ersten Dienstes durch den ersten Knoten (700, 710) basierend auf den Konfigurationsinformationen.

4. Datenpaketübertragungsverfahren nach einem der Ansprüche 1 bis 3, wobei der erste Knoten (700, 710) dem zweiten Knoten (800, 810) die verarbeiteten Dienste mitteilt, sodass der zweite Knoten (800, 810) die verarbeiteten Dienste nicht wiederholt verarbeitet.

5. Datenpaketübertragungsverfahren nach einem der Ansprüche 1 bis 4, wobei das Verarbeiten des ersten Dienstes durch den ersten Knoten (700, 710) basierend auf dem Datenpaket Folgendes umfasst:
Aufrufen einer Zielressource durch den ersten Knoten (700, 710), um den ersten Dienst zu verarbeiten, wobei die Zielressource ein Teil aller Dienstverarbeitungsressourcen des ersten Knotens (700, 710) ist.

6. Datenpaketübertragungsverfahren nach Anspruch 1, wobei die zweiten Metadaten ferner eine durch den ersten Knoten (700, 710) hinzugefügte Anweisung umfassen und die Anweisung verwendet wird, um den zweiten Knoten (800, 810) zum Durchführen einer Operation an dem Datenpaket und den zweiten Metadaten zu veranlassen.

7. Datenpaketübertragungsverfahren, umfassend:
Empfangen eines Datenpakets und zweiter Metadaten durch einen zweiten Knoten (800, 810), wobei die zweiten Metadaten ein Dienstverarbeitungsergebnis des Datenpakets durch einen dem zweiten Knoten (800, 810) vorgelagerten Knoten angeben; und
Senden des Datenpakets durch den zweiten Knoten (800, 810) an eine Empfangsvorrichtung als Reaktion auf das Angeben der Verarbeitungsergebnisse aller Dienste des Datenpakets durch die zweiten Metadaten,
wobei das Verfahren nach dem Empfangen des Datenpakets und der zweiten Metadaten durch den zweiten Knoten (800, 810) und vor dem Senden des Datenpakets durch den zweiten Knoten (800, 810) an die Empfangsvorrichtung ferner Folgendes umfasst:
Erkennen durch den zweiten Knoten (800, 810), dass Dienste des Datenpakets ferner einen zweiten Dienst umfassen, wobei der zweite Dienst alle bei den Diensten des Datenpakets unverarbeiteten Dienste angibt; und
Verarbeiten des zweiten Dienstes durch den zweiten Knoten (800, 810) basierend auf den zweiten Metadaten.

8. Datenpaketübertragungsverfahren nach Anspruch 1, das bei dem Datenübertragungsnetzwerk angewendet wird, wobei das Datenübertragungsnetzwerk den ersten Knoten (700, 710) und den zweiten Knoten (800, 810) umfasst und das Verfahren ferner umfasst:
Senden des Datenpakets durch den zweiten Knoten (800, 810) an eine Empfangsvorrichtung als Reaktion auf das Angeben der Verarbeitungsergebnisse aller Dienste des Datenpakets durch die zweiten Metadaten.

9. Datenpaketübertragungsverfahren nach Anspruch 7, das auf das Datenübertragungsnetzwerk angewendet wird, wobei das Datenübertragungsnetzwerk einen ersten Knoten (700, 710) und einen zweiten Knoten (800, 810) umfasst, wobei das Verfahren vor dem Empfangen des Datenpakets und der zweiten Metadaten durch den zweiten Knoten (800, 810) Folgendes umfasst:
Empfangen des Datenpakets und erster Metadaten durch den ersten Knoten (700, 710), wobei die ersten Metadaten verwendet werden, um ein Dienstverarbeitungsergebnis des Datenpakets durch einen dem ersten Knoten (700, 710) vorgelagerten Knoten anzugeben;
Bestimmen eines ersten Dienstes basierend auf den ersten Metadaten und Verarbeiten des ersten Dienstes basierend auf dem Datenpaket durch den ersten Knoten (700, 710), wobei der erste Dienst zu einem oder mehreren unverarbeiteten Diensten des Datenpakets gehört; und
Verwenden der ersten Metadaten und eines Verarbeitungsergebnisses des ersten Dienstes als zweite Metadaten und Senden des Datenpakets und der zweiten Metadaten an den zweiten Knoten (800, 810) durch den ersten Knoten (700, 710), wobei die zweiten Metadaten ein Dienstverarbeitungsergebnis des Datenpakets durch den ersten Knoten (700, 710) und das Dienstverarbeitungsergebnis des Datenpakets durch einen dem ersten Knoten (700, 710) vorgelagerten Knoten umfassen.

10. Datenpaketübertragungsverfahren nach Anspruch 9, wobei das Bestimmen eines ersten Dienstes durch den ersten Knoten (700, 710) basierend auf den ersten Metadaten Folgendes umfasst:
Identifizieren des durch voreingestellte Konfigurationsinformationen angegebenen ersten Dienstes durch den ersten Knoten (700, 710) als Reaktion auf das Empfangen der ersten Metadaten, wobei die voreingestellten Konfigurationsinformationen einen Dienst angeben, der zu einem Datenpaket gehört und durch den ersten Knoten (700, 710) verarbeitet werden muss.

11. Datenpaketübertragungsverfahren nach Anspruch 9, wobei das Bestimmen eines ersten Dienstes durch den ersten Knoten (700, 710) basierend auf den ersten Metadaten Folgendes umfasst:
Parsen der ersten Metadaten durch den ersten Knoten (700, 710), um Konfigurationsinformationen zu erlangen, wobei die Konfigurationsinformationen den ersten Dienst angeben; und Bestimmen des ersten Dienstes durch den ersten Knoten (700, 710) basierend auf den Konfigurationsinformationen.

12. Datenpaketübertragungsverfahren nach einem der Ansprüche 9 bis 11, wobei die ersten Metadaten ferner mindestens eines aus Folgendem umfassen:
Informationen über einen oder mehrere unverarbeitete Dienste des Datenpakets oder Startinformationen des ersten Dienstes, wobei die Startinformationen einen Startvorgang zur Verarbeitung des ersten Dienstes angeben.

13. Datenpaketübertragungsverfahren nach den Ansprüchen 9 bis 12, wobei das Verarbeiten des ersten Dienstes durch den ersten Knoten (700, 710) basierend auf dem Datenpaket Folgendes umfasst:
Aufrufen einer Zielressource durch den ersten Knoten (700, 710), um den ersten Dienst zu verarbeiten, wobei die Zielressource ein Teil aller Dienstverarbeitungsressourcen des ersten Knotens (700, 710) ist.

14. Datenpaketübertragungsverfahren nach Anspruch 8 oder 9, wobei die zweiten Metadaten ferner eine durch den ersten Knoten (700, 710) hinzugefügte Anweisung umfassen und die Anweisung derart ausgelegt ist, dass der zweite Knoten (800, 810) zum Durchführen einer Operation an dem Datenpaket und den zweiten Metadaten veranlasst wird.

15. Datenpaketübertragungsverfahren nach Anspruch 8, wobei das Verfahren nach dem Empfangen des Datenpakets und der zweiten Metadaten durch den zweiten Knoten (800, 810) und vor dem Senden des Datenpakets durch den zweiten Knoten (800, 810) an eine Empfangsvorrichtung ferner Folgendes umfasst:
Erkennen durch den zweiten Knoten (800, 810), dass Dienste des Datenpakets ferner einen zweiten Dienst umfassen, wobei der zweite Dienst alle bei den Diensten des Datenpakets unverarbeiteten Dienste angibt; und
Verarbeiten des zweiten Dienstes durch den zweiten Knoten (800, 810) basierend auf den zweiten Metadaten.

## Revendications

1. Procédé de transmission de paquet de données, comprenant :
la réception, par un premier noeud (700, 710), d'un paquet de données et de premières métadonnées, dans lequel les premières métadonnées sont utilisées pour indiquer un résultat de traitement de service du paquet de données par un noeud en amont du premier noeud (700, 710) ;
la détermination, par le premier noeud (700, 710), d'un premier service basé sur les premières métadonnées, et le traitement du premier service basé sur le paquet de données, dans lequel le premier service appartient à un ou plusieurs services non traités du paquet de données ; et
l'utilisation, par le premier noeud (700, 710), des premières métadonnées et d'un résultat de traitement du premier service en tant que secondes métadonnées, et l'envoi du paquet de données et des secondes métadonnées à un second noeud (800, 810), dans lequel les secondes métadonnées comprennent un résultat de traitement de service du paquet de données par le premier noeud (700, 710) et le résultat de traitement de service du paquet de données par le noeud en amont du premier noeud (700, 710),
dans lequel les premières métadonnées comprennent des informations sur un ou plusieurs services non traités du paquet de données, et
dans lequel le premier noeud (700, 710) est n'importe quel noeud à l'exception d'un noeud de dernier saut dans un pipeline du paquet de données et le second noeud (800, 810) est un noeud de saut suivant du premier noeud (700, 710).

2. Procédé de transmission de paquets de données selon la revendication 1, dans lequel la détermination, par le premier noeud (700, 710), d'un premier service basé sur les premières métadonnées comprend :
en réponse à la réception des premières métadonnées, l'identification, par le premier noeud (700, 710), du premier service indiqué par des informations de configuration prédéfinies, dans lequel les informations de configuration prédéfinies indiquent un ou plusieurs services qui sont d'un paquet de données et qui doivent être traités par le premier noeud (700, 710).

3. Procédé de transmission de paquets de données selon la revendication 1, dans lequel la détermination, par le premier noeud (700, 710), d'un premier service basé sur les premières métadonnées comprend :
l'analyse, par le premier noeud (700, 710), des premières métadonnées pour obtenir des informations de configuration, dans lequel les informations de configuration indiquent le premier service ; et
la détermination, par le premier noeud (700, 710), du premier service sur la base des informations de configuration.

4. Procédé de transmission de paquet de données selon l'une quelconque des revendications 1 à 3, dans lequel le premier noeud (700, 710) notifie au second noeud (800, 810) les services traités de sorte que le second noeud (800, 810) ne traite pas à plusieurs reprises les services traités.

5. Procédé de transmission de paquet de données selon l'une quelconque des revendications 1 à 4, dans lequel le traitement, par le premier noeud (700, 710), du premier service basé sur le paquet de données comprend :
l'invocation, par le premier noeud (700, 710), d'une ressource cible pour traiter le premier service, dans lequel la ressource cible fait partie de toutes les ressources de traitement de service du premier noeud (700, 710).

6. Procédé de transmission de paquet de données selon la revendication 1, dans lequel les secondes métadonnées comprennent en outre une instruction ajoutée par le premier noeud (700, 710), et l'instruction est utilisée pour déclencher le second noeud (800, 810) pour effectuer une opération sur le paquet de données et les secondes métadonnées.

7. Procédé de transmission de paquet de données, comprenant :
la réception, par un second noeud (800, 810), d'un paquet de données et de secondes métadonnées, dans lequel les secondes métadonnées indiquent un résultat de traitement de service du paquet de données par un noeud en amont du second noeud (800, 810) ; et
en réponse à l'indication, par les secondes métadonnées, de résultats de traitement de tous les services du paquet de données, l'envoi, par le second noeud (800, 810), du paquet de données à un dispositif de réception,
dans lequel après la réception, par le second noeud (800, 810), du paquet de données et des secondes métadonnées, et avant l'envoi, par le second noeud (800, 810), du paquet de données au dispositif de réception, le procédé comprend en outre :
la détection, par le second noeud (800, 810), que les services du paquet de données comprennent en outre un second service, dans lequel le second service indique tous les services non traités dans les services du paquet de données ; et
le traitement, par le second noeud (800, 810), du second service sur la base des secondes métadonnées.

8. Procédé de transmission de paquet de données selon la revendication 1, appliqué au réseau de transmission de données, dans lequel le réseau de transmission de données comprend le premier noeud (700, 710) et le second noeud (800, 810), et le procédé comprend en outre :
en réponse à l'indication, par les secondes métadonnées, de résultats de traitement de tous les services du paquet de données, l'envoi, par le second noeud (800, 810), du paquet de données à un dispositif de réception.

9. Procédé de transmission de paquet de données selon la revendication 7, appliqué au réseau de transmission de données, dans lequel le réseau de transmission de données comprend un premier noeud (700, 710) et le second noeud (800, 810), dans lequel avant la réception, par le second noeud (800, 810), du paquet de données et des secondes métadonnées, le procédé comprend :
la réception, par le premier noeud (700, 710), du paquet de données et de premières métadonnées, dans lequel les premières métadonnées sont utilisées pour indiquer un résultat de traitement de service du paquet de données par un noeud en amont du premier noeud (700, 710) ;
la détermination, par le premier noeud (700, 710), d'un premier service basé sur les premières métadonnées, et le traitement du premier service basé sur le paquet de données, dans lequel le premier service appartient à un ou plusieurs services non traités du paquet de données ; et
l'utilisation, par le premier noeud (700, 710), des premières métadonnées et d'un résultat de traitement du premier service en tant que secondes métadonnées, et l'envoi du paquet de données et des secondes métadonnées au second noeud (800, 810), dans lequel les secondes métadonnées comprennent un résultat de traitement de service du paquet de données par le premier noeud (700, 710) et le résultat de traitement de service du paquet de données par un noeud en amont du premier noeud (700, 710).

10. Procédé de transmission de paquet de données selon la revendication 9, dans lequel la détermination, par le premier noeud (700, 710), d'un premier service basé sur les premières métadonnées comprend :
en réponse à la réception des premières métadonnées, l'identification, par le premier noeud (700, 710), du premier service indiqué par des informations de configuration prédéfinies, dans lequel les informations de configuration prédéfinies indiquent un service qui est d'un paquet de données et qui doit être traité par le premier noeud (700, 710).

11. Procédé de transmission de paquet de données selon la revendication 9, dans lequel la détermination, par le premier noeud (700, 710), d'un premier service basé sur les premières métadonnées comprend :
l'analyse, par le premier noeud (700, 710), des premières métadonnées pour obtenir des informations de configuration, dans lequel les informations de configuration indiquent le premier service ; et
la détermination, par le premier noeud (700, 710), du premier service sur la base des informations de configuration.

12. Procédé de transmission de paquet de données selon l'une quelconque des revendications 9 à 11, dans lequel les premières métadonnées comprennent en outre au moins l'un des éléments suivants :
des informations sur un ou plusieurs services non traités du paquet de données ou des informations de démarrage du premier service, dans lequel les informations de démarrage indiquent un processus de démarrage pour traiter le premier service.

13. Procédé de transmission de paquet de données selon les revendications 9 à 12, dans lequel le traitement, par le premier noeud (700, 710), du premier service basé sur le paquet de données comprend :
l'invocation, par le premier noeud (700, 710), d'une ressource cible pour traiter le premier service, dans lequel la ressource cible fait partie de toutes les ressources de traitement de service du premier noeud (700, 710).

14. Procédé de transmission de paquet de données selon la revendication 8 ou 9, dans lequel les secondes métadonnées comprennent en outre une instruction ajoutée par le premier noeud (700, 710), et l'instruction est configurée pour déclencher le second noeud (800, 810) pour effectuer une opération sur le paquet de données et les secondes métadonnées.

15. Procédé de transmission de paquet de données selon la revendication 8, dans lequel après la réception, par le second noeud (800, 810), du paquet de données et des secondes métadonnées, et avant l'envoi, par le second noeud (800, 810), du paquet de données à un dispositif de réception, le procédé comprend en outre :
la détection, par le second noeud (800, 810), que les services du paquet de données comprennent en outre un second service, dans lequel le second service indique tous les services non traités dans les services du paquet de données ; et
le traitement, par le second noeud (800, 810), du second service sur la base des secondes métadonnées.
